Europäisches Patentamt

European Patent Office

Office européen des brevets

(19)

(11) Veröffentlichungsnummer: **0 017 749**
**B1**

(12) **EUROPÄISCHE PATENTSCHRIFT**

(45) Veröffentlichungstag der Patentschrift: **22.06.83**

(51) Int. Cl.³: **D 05 B 81/00**

(21) Anmeldenummer: **80101140.4**

(22) Anmeldetag: **06.03.80**

(54) Nähmaschine.

(30) Priorität: **19.04.79 CH 3676/79**

(43) Veröffentlichungstag der Anmeldung:
**29.10.80 Patentblatt 80/22**

(45) Bekanntmachung des Hinweises auf die Patenterteilung:
**22.06.83 Patentblatt 83/25**

(84) Benannte Vertragsstaaten:
**DE FR IT SE**

(56) Entgegenhaltungen:
**FR - A - 2 067 174**
**FR - E - 47 096**
**US - A - 2 848 963**
**US - A - 3 596 010**
**US - A - 3 680 939**
**US - A - 3 810 414**
**US - A - 3 871 310**
**US - A - 4 092 937**
**US - A - 4 160 422**

(73) Patentinhaber: **Dorina Nähmaschinen GmbH**
**Amalienbadstrasse 41**
**D-7500 Karlsruhe-Durlach (DE)**

(72) Erfinder: **Meier, Günter**
**Reichenbachstrasse 11**
**D-7500 Karlsruhe-Durlach (DE)**

(74) Vertreter: **Klein, Friedrich**
**Königstrasse 154**
**D-6750 Kaiserslautern (DE)**

Courier Press, Leamington Spa, England.

## Nähmaschine

Die Erfindung betrifft eine Nähmaschine nach dem Oberbegriff des Patentanspruches.

Bei den bisher bekannten Nähmaschinen, deren Gehäuse mit Leuchtdioden ausgestattet sind, dienen diese Leuchtdioden im allgemeinen zur Anzeige von Nähzuständen, die durch Betätigung von Bedienungstasten herbeigeführt wurden. Diese Anordnung läßt sich in der bekannten Form jedoch nicht zur optischen Anzeige von Einfädelhilfen verwenden.

Eine symbolische Darstellung von Markierungen auf dem Gehäuse der Nähmaschine im Deckel oder auf dem Deckel ist zwar ebenfalls bekannt, die Möglichkeit der Information ist hierbei aber sehr beschränkt.

Die Erfindung bezweckt eine Verbesserung der Information der Bedienungsperson der Nähmaschine über den Einfädelverlauf des Oberfadens und löst dies durch die im Kennzeichen des Patentanspruches angegebenen Merkmale. Mit der Ausstattung der Nähmaschine nach der Erfindung ist es nunmehr möglich, der Bedienungsperson neben der akustischen Information zur Bedienung der Maschine durch ein Tonbandgerät gezielte, durch das Tonbandgerät gesteuerte optische Hinweise am Gehäuse der Nähmaschine zur Ausführung der Anweisung zu geben. Auf diese Weise wird eine einfache Bedienung der Nähmaschine, beispielsweise beim Einfädelvorgang erreicht.

In der Zeichnung sind verschiedene Ausführungsbeispiele der Erfindung dargestellt. Es zeigen:

Fig. 1 die schaubildliche Darstellung einer Nähmaschine, in deren Oberarm ein von oben zugängliches Tonbandgerät eingebaut ist;

Fig. 2 die schaubildliche Darstellung des oberen Teiles einer weiteren Nähmaschine, in deren Oberarm ein von vorn zugängliches Tonbandgerät engebaut ist.

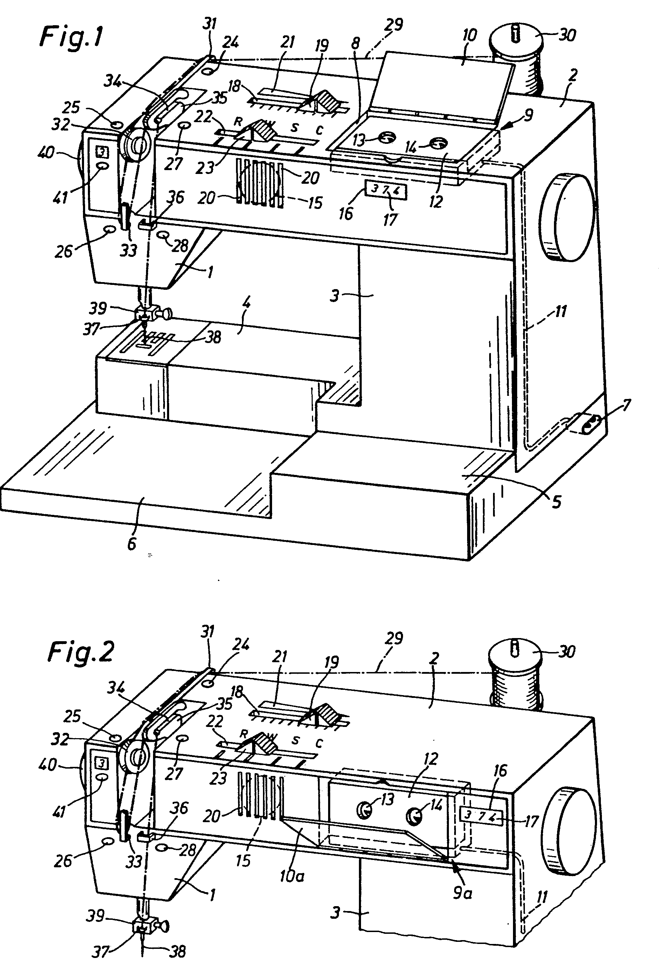

Die in der Fig. 1 dargestellte Nähmaschine besteht aus Kopf 1, Oberarm 2, Ständer 3, Unterarm 4 und Sockel 5 mit Bodenplatte 6. Im Ständer 3 ist ein nicht dargestellter Antriebsmotor für die Nähmaschine eingebaut, der über einen Netzanschluß 7 mit Strom versorgt wird.

In einer Ausnehmung 8 des Oberarmes 2 ist ein an sich bekanntes Tonbandgerät 9, vorteilhafterweise ein sogenanntes Kassettenwiedergabegerät, eingebaut und durch einen Klappdeckel 10 nach oben abgeschlossen. Der nicht dargestellte Antrieb des Tonbandgerätes 9 ist mittels eines Kabels 11 evtl. über einen Transformator an den Netzanschluß 7 angeschlossen. Das Tonbandgerät 9 weist die übliche Kassette 12 auf, in der zwei Spulen mit einem darauf befindlichen Tonband eingebaut sind. Die Spulen werden in an sich bekannter Weise durch zwei Antriebszapfen 13 und 14 über einen unterhalb der Kassette 12 befindlichen nicht dargestellten Antrieb gesteuert. Im Wiedergabebetrieb werden die auf dem Tonband gespeicherten Informationen in bekannter Weise durch einen nicht dargestellten Tonkopf aufgenommen und über einen ebenfalls nicht dargestellten Verstärker einem Lautsprecher 15 zugeleitet.

Durch ein Sichtfenster 16, welches in der Frontseite des Oberarmes 2 vorgesehen ist, läßt sich ein in geeigneter Weise mit dem Antrieb des Tonbandgerätes 9 verbundenes Zählwerk 17 für das Tonband ablesen. Auf dem Oberarm 2 ist ein Schlitz 18 vorgesehen, aus dem ein Griff 19 ragt. Dieser ist mit einem unterhalb des Schlitzes 18 im Oberarm 2 befestigten Schieberegler für die Einstellung der Lautstärke des Lautsprechers 15 verbunden, der hinter Schalldurchtrittsöffnungen 20 in der Frontseite des Oberarmes 2 befestigt ist. Eine neben dem Schlitz 18 angebrachte Markierung 21 in Form eines gestreckten Dreiekes bezeichnet den Grad der Lautstärke bei der jeweiligen Stellung des Griffes 19.

Ein zweiter aus einem Schlitz 22 in den Oberarm 2 ragender Griff 23 ist mit einem im Oberarm 2 eingebauten Schiebeumschlater zur Betätigung der verschiedenen Funktionen des Tonbandgerätes 9 verbunden, wie "Rücklauf", "Wiedergabe", "Stop" und "Kassettenfach öffnen". Die verschiedenen möglichen Stellungen des Griffes 23 sind durch entsprechende Markierungen R, W, S und C an der einen Seite des Schlitzes 22 gekennzeichnet. Das Öffnen des Kassettenfaches erfolgt durch Verschieben des Griffes 23 aud die Markierung C. Dabei wird eine nicht dargestellte Verriegelung des Klappdeckels 10 gelöst und dieser kann aufgeklappt werden. Der Austausch der Kassetten 12 erfolgt in bekannter Weise.

Nach dem Schließen des Klappdeckels 10 in der Stellung S des Griffes 23 wird das Tonband in der Stellung W des Griffes 23 in Vorwärtsrichtung angetrieben, wobei die Wiedergabe der auf dem Tonband gespeicherten Informationen akustisch durch den Lautsprecher 15 erfolgt.

Die Einstellung auf eine gewünschte Information läßt sich mit Hilfe des Zählwerkes 17 vornehmen.

An dem Kopf 1 und auf dem Oberarm 2 der Nähmaschine sind Leuchtdioden 24 bis 28 angebracht, die in an sich bekannter nicht dargestellter Weise über Steuerleitungen mit einem an sich bekannten Impulsschalter des Tonbandgerätes 9 verbunden sind, welcher die Dioden 24 bis 28 unabhängig voneinander ein- und ausschalten kann. Die Dioden 24 bis 28 markieren den Verlauf eines Oberfadens 29, Dieser verläuft von einer am Oberarm 2 gelagerten Fadenrolle 30 zu einer Umlenkstelle 31, die durch die Diode 24 gekennzeichnet ist, über einen durch die Diode 25 markierte Fadenspannung 32, eine durch die Diode 26 markierte Umlenkstelle 33 und durch einen Einfädelschlitz 34 in einem Fadenhebel 35. Neben der oberen Endstellung des Fadenhebels 35, der zweckmäßigerweise immer in seiner in Fig. 1 dargestellten oberen Stellung eingefädelt wird, ist die Diode 27 angebracht. Der Oberfaden 29 verläuft weiter über eine am Kopf 1 angebrachte Fadenöse 36, welche durch die Diode 28 markiert ist, zu einer Fadenöse 37 in einem eine Nadel 38 tragenden Nadelhalter 39 und dann zur Öse der Nadel 38.

Beim Abhören der akustischen Information über den Einfädelweg des Oberfadens 29 gibt eine parallel zur Tonspur angeordnete Impulsspur auf dem Tonband einen Impuls an den erwähnten Impulsschalter. Dieser schaltet die Dioden 24 bis 28 ein, die dann aufleuchten und die Reihenfolge des Einfädelvorganges markieren. Nach einem bestimmten Zeitablauf schaltet der Impulsschalter die Dioden 24 bis 28 wieder aus.

Durch Impulse des Tonbandes lassen sich weitere Anzeigemittel steuern. So kann beispielsweise eine bestimmte Winkelstellung einer mit der Fadenspannung verbundenen Einstellscheibe 40 durch eine Leuchtdiode 41 markiert werden, indem diese über einen nicht dargestellten Mikroschalter mit dem Impulsschalter verbunden ist. Der Microschalter wird von einer Kurvenbahn der Einstellscheibe 40 dann geschlossen, wenn die vorbestimmte Winkelstellung erreicht ist. Bei der akustischen Information über das Nähen einer Raupennaht oder einer Blindstichnaht gibt die Impulsspur auf dem Tonband an den Impulsschalter einen Impuls ab, der die Zuleitung zum Mikroschalter an der Diode 41 unter Spannung setzt. Sobald die Bedienungsperson auf Anweisung der Information des Tonbandes die Einstellscheibe 40 in die vorbestimmte Stellung verdreht, wird der Mikroschalter von der Kurvenbahn der Einstellscheibe 40 eingeschaltet und die Diode 41 leuchtet auf.

Auf dem Tonband kann die vollständige Bedienungsanweisung für die Einstellung der Nähmaschine und ihren Gebrauch enthalten sein, vor allem Anweisungen über den Einfädelweg von Ober- und Unterfaden, die Einstellungen der Fadenspannungen, die Auswahl und die Besprechung der Nähfüße für die verschiedenen Näharbeiten, die Reihenfolge der auszuführenden Handgriffe, die Abstimmung von Stoff, Garn und Nadel sowie alle anderen notwendigen oder brauchbaren Informationen zum Gebrauch der Nähmaschine. Gleichzeitig lassen sich Nähanweisungen zur zweckmäßigen Herstellung bestimmter Kleidungsstücke in Form eines Lehrganges durch das Tonbandgerät 9 wiedergeben.

Falls das Tonbandgerät 9 in eine Nähmaschine eingebaut ist, welche mit einer Mustersteuereinrichtung ausgestattet ist, die mit einem einen programmierbaren elektronischen Speicher aufweisenden Steuerkreis versehen ist, besteht die Möglichkeit, es zum Einspielen von Musterdaten in den Speicher zu benutzen. Das Tonband in der Kassette 12 muß nur entsprechende Informationen aufweisen und die Möglichkeit des Einlesens dieser Informationen in den Speicher gegeben sein.

Die Fig. 2 zeigt eine der Fig. 1 entsprechende Nähmaschine, bei welcher ein von der Frontseite zugängliches Tonband 9a in den Oberarm 2 der Maschine eingebaut ist. Das Tonbandgerät 9a ist mit einer Klappe 10a ausgestattet, die sich zum Auswechseln der Kassette 12 nach vorn aufklappen läßt. Der übrige Aufbau sowie die Anordnung der Bedienungselemente des Tonbandgerätes 9a entspricht dem Ausführungsbeispiel nach der Fig. 1.

**Patentanspruch**

Nähmaschine mit einem Gehäuse, das zur Markierung eines vorbestimmten Zustandes mit Leuchtdioden ausgestattet ist und mit einer Mehrzahl von mit dem Oberfaden zusammenwirkenden Führungselementen, dadurch gekennzeichnet, daß jeweils einem der Führungselemente (31, 32, 33, 35 und 36) für den Oberfaden (29) je eine Leuchtdiode (24 bis 28) zugeordnet ist, daß die Leuchtdiodes (24 bis 28) an dem Gehäuse (1, 2) in einer Anordnung befestigt sind, welche dem Verlauf des von der Nähmaschine zu verarbeitenden Oberfadens (29) entspricht, und daß eine in einer von außen zugänglichen Ausnehmung (8) in dem Gehäuse (2) untergebrachtes Tonbandgerät (9, 9a) einen von einer an sich bekannten, parallel zu Tonspur des Tonbandes verlaufenden Impulsspur gesteuerten Impulsgeber enthält, der über Steuerleitungen zur Ein- und Ausschaltung mit den Leuchtdiodes (24 bis 28) verbunden ist.

**Revendication**

Machine à coudre, comportant un carter qui, pour marquer un état prédéterminé, est muni de diodes luminescentes, sinsi qu'une pluralité d'éléments de guidage qui coopèrent avec le fil de dessus, caractérisée en ce qu'à chacun des éléments de guidage (31, 32, 33, 35 et 36) du fil de dessus (29) est associée une diode luminescente (24 à 28), en ce que les diodes luminescentes (25 à 28) sont fixées sur le carter (1, 2) suivant une disposition qui correspond au parcours du fil de dessus (29) destiné à être utilisé dans la machine, et en ce qu'un magnétophone (9; 9a) logé dans un évidement (8) accessible de l'extérieur et ménagé dans le carter (2) contient un générateur d'impulsions commandé par une piste d'impulsions parallèle à la piste sonore de la bande magnétique, qui est relié par des lignes de commande aux diodes luminescentes (24 à 28) pour la mise sous tension et hors tension de celles-ci.

## Claim

A sewing machine comprising a casing, which is provided with luminous diodes for marking a predetermined state, and a plurality of guide elements cooperating with the upper thread, characterized in that one luminous diode (24 to 18) is associated in each case with one of the guide elements (31, 32, 33, 34 and 36) for the upper thread (29), the luminous diodes (24 to 28) are secured to the casing (1, 2) in an arrangement which corresponds to the path of the upper thread (29) to be handled by the sewing machine, and a tape recorder (9, 9a) accommodated in a recess (8) in the casing (2) accessible from the outside contains a pulse generator which is controlled by a pulse track known *per se* extending parallel to the sound track of the tape recorder and which is connected to the luminous diodes (24 to 28) by way of control lines for switching on and off.

Fig.1

Fig.2